# EUROPÄISCHE PATENTANMELDUNG

(11) **EP 1 426 348 A1**
(43) Veröffentlichungstag der Anmeldung: **09.06.2004**
(21) Anmeldenummer: 03026987.2
(22) Anmeldetag: 26.11.2003
(51) Int. Cl.: C03C 25/36

(54) **Verwendung von Epoxidharzen zur Beschichtung von Glas**

(30) Priorität: 05.12.2002 DE 10256883
(71) Anmelder: Cognis Deutschland GmbH & Co. KG, 40589 Düsseldorf (DE)
(72) Erfinder: Höfer, Rainer, Dr., 40477 Düsseldorf (DE); Nagorny, Ulrich, 40721 Hilden (DE); Roloff, Thorsten, Dr., 40597 Düsseldorf (DE)

(57) **Zusammenfassung**

Die Erfindung betrifft die Verwendung von Epoxidharzen, die Umsetzungsprodukte von Bisphenol-A und/oder Bisphenol-F mit Epichlorhydrin darstellen, zur Beschichtung von Glas.

## Beschreibung

### Gebiet der Erfindung

Die Erfindung betrifft die Verwendung von Epoxidharzen, die Umsetzungsprodukte von Bisphenol-A und/oder Bisphenol-F mit Epichlorhydrin darstellen, zur Beschichtung von Glas.

### Stand der Technik

**EP-A-137 427** beschreibt Schlichtemittel für Glasfasern die im wesentlichen aus Haftvermittlern, Filmbildnern sowie gegebenenfalls Gleitmitteln, Netzmitteln und weiteren an sich bekannten Zusätzen bestehen. Darüber hinaus enthalten die Schlichten wasserunlösliche bzw. wasserdispergierbare verkappte Polyisocyanate.

### Beschreibung der Erfindung

Aufgabe der vorliegenden Erfindung war es, Substanzen bzw. Zusammensetzungen bereitzustellen, die sich zum Beshichten von Glas und insbesondere von Glasfasern eignen.

Gegenstand der vorliegenden Erfindung ist die Verwendung von Epoxidharzen, die Umsetzungsprodukte von Bisphenol-A und/oder Bisphenol-F mit Epichlorhydrin darstellen, zur Beschichtung von Glas.

Ein weiterer Erfindungsgegenstand ist die Verwendung von wäßrigen 2-K-Beschichtungszusammensetzungen enthaltend
A) 1 bis 98 Gew.-% Epoxidharze, die Umsetzungsprodukte von Bisphenol-A und/oder Bisphenol-F mit Epichlorhydrin darstellen,
B) 1 bis 98 Gew.-% wasserverdünnbare Epoxidharzhärter und
W) 1 bis 98 Gew.-% Wasser
zur Beschichtung von Glas. In einer Ausführungsform handelt es sich bei dem zu beschichtenden Glas um Glasfasern.

Ein weiterer Erfindungsgegenstand sind beschichtete Glasfasern, dadurch erhältlich, daß man man eine wäßrige 2-K-Beschichtungszusammensetzung enthaltend
A) 1 bis 98 Gew.-% Epoxidharze, die Umsetzungsprodukte von Bisphenol-A und/oder Bisphenol-F mit Epichlorhydrin darstellen,
B) 1 bis 98 Gew.-% wasserverdünnbare Epoxidharzhärter und
W) 1 bis 98 Gew.-% Wasser
mit der Oberfläche der Glasfasern in Kontakt bringt und anschließend aushärten läßt.

Ein weiterer Erfindungsgegenstand ist die Verwendung von beschichteten Glasfasern, die wie gerade beschrieben erhältlich sind, zur Verstärkung von Kunststoffasem.

Ein weiterer Erfindungsgegenstand sind Verbundwerkstoff enthaltend beschichtete Glasfasern, die wie oben beschrieben erhältlich sind

Es sei ausdrücklich angemerkt, daß bezüglich der Komponenten A) und B) jeweils einzelne Spezies oder Gemische solcher Spezies eingesetzt werden können. Es können also jeweils sowohl ein als auch mehrere Epoxidharze A) bzw. Epoxidharzhärter B) eingesetzt werden.

Die Gew.-%-Angaben für die Komponenten A) und B) beziehen sich im übrigen stets auf den jeweiligen Wirkstoffgehalt. Wenn beispielsweise eine wäßrige 2-K-Beschichtungszusammensetzung hergestellt wird, indem ein oder mehrere Komponenten in wäßriger Angebotsform eingesetzt werden, dann ist im Hinblick auf die Charakterisierung der Zusammensetzung der gesamten 2-K-Beschichtungszusammensetzung für die einzelnen Komponenten jeweils maßgebend, wieviel Wirksubstanz jeweils vorliegt und nicht, ob im Zuge der Herstellung der Beschichtungszusammensetzung bestimmte Komponenten wasserfrei oder wasserhaltig eingesetzt wurden; der Anteil an Komponente W), also Wasser, ergibt sich dementsprechend in jedem Fall als die Summe des in der gesamten Beschichtungszusammensetzung vorhandenen Wassers.

### Zu Komponente A)

Bei **Komponente A)** der erfindungsgemäßen Beschichtungszusammensetzungen handelt es sich um Epoxidharze, die Umsetzungsprodukte von Bisphenol-A und/oder Bisphenol-F mit Epichlorhydrin darstellen. Derartige Umsetzungsprodukte sind dem Fachmann bekannt (vergleiche z.B. DE-A-199 54 828).

Die flüssigen unmodifizierten Bis-A- bzw. Bis-F-Epoxidharze sind lösemittelfrei, leicht verarbeitbar und haben typischerweise Viskositäten im Bereich von 5.000 bis 15.000 mPas, vorzugsweise 5.000 bis 10.000 mPas (die Angaben von Viskositäten bezieht sich hier und im folgenden auf Messungen in Substanz bei 20 °C, gemessen mit einem Brookfield Viskosimeter). Sie sind kommerziell verfügbar. Gewünschtenfalls läßt sich die Viskosität solcher Harze durch Zugabe von Reaktivverdünnern weiter erniedrigen, beispielsweise auf 200 mPas.

In einer Ausführungsform setzt man als Komponente A) bei 20 °C **flüssige** Epoxidharze des oben genannten Typs (Umsetzungsprodukte von Bisphenol-A und/oder Bisphenol-F mit Epichlorhydrin) ein.

Vorzugsweise setzt man als Komponente A) bei 20 °C flüssige Epoxidharze ein, die Umsetzungsprodukte von Bisphenol-A mit Epichlorhydrin sind.

### Zu Komponente B)

Bei **Komponente B)** der erfindungsgemäßen Beschichtungszusammensetzungen handelt es sich um wasserverdünnbare Epoxidharzhärter. Vorzugsweise werden als Komponente B) Verbindungen eingesetzt, die sich von Addukten auf Basis α,β-ungesättigter Carbonsäureester und Mono-, Di- oder Polyaminopolyalkylenoxid-Verbindungen ableiten. Vorzugsweise werden die Verbindungen B) ausgewählt aus der Gruppe der unten näher beschriebenen Typen B1) bis B3).

**Härter vom Typ B1)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, in Gegenwart eines Umesterungskatalysators mit
(b) ein oder mehreren Hydroxyverbindungen umsetzt, wobei man die Verbindungen (a) und (b) in solchen Mengen einsetzt, daß das Äquivalentverhältnis der Hydroxylgruppen in (b) zu den Estergruppen COOR¹ in den α,β-ungesättigten Carbonsäureestern (a) im Bereich von 1,5:1 bis 10:1 liegt,
   das hierbei erhaltene Zwischenprodukt Z 1 mit
(c) ein oder mehreren Mono-, Di- oder Polyaminopolyalkylenoxid-Verbindungen umsetzt, wobei man ein Äquivalentverhältnis der reaktiven H-Atome an den Aminostickstoffatomen von (c) zu den Estergruppen in der Zwischenverbindung Z1 im Bereich von 10:1 bis 1:10 einstellt,
   das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

Die erfindungsgemäßen Härter stellen je nach ihrem Molekulargewicht entweder flüssige oder feste Substanzen dar.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so daß die funktionelle Gruppe NH₂ zwei reaktive Gruppen, nämlich die Wasserstoffatome, aufweist.

In einer Ausführungsform setzt man die Zwischenverbindung Z1 und die Verbindung (c) in solchen Mengen ein, daß das Äquivalentverhältnis der reaktiven H-Atome an den Aminostickstoffatomen von (c) zu den Estergruppen in der Zwischenverbindung Z1 im Bereich von 4 : 1 bis 1 : 4 und insbesondere von 2,5 : 1 bis 1,5 : 1 liegt.

In einer Ausführungsform stellt man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 50:1 bis 10:1 ein.

Beispiele für die erfindungsgemäß einzusetzenden **α,β-ungesättigten Carbonsäureester (a)** der oben genannten Struktur (I) sind Acrylsäuremethylester, Acrylsäureethylester, Maleinsäuredimethylester, Maleinsäurediethylester, Fumarsäuredimethylester, Fumarsäurediethylester, Itaconsäuredimethylester, Itaconsäurediethylester. Besonders bevorzugt sind dabei als Verbindungen (a) Maleinsäuredialkylester, insbesondere Maleinsäurediethylester und Maleinsäuredimethylester.

**Die Hydroxyverbindungen (b)** können aliphatisch oder aromatisch sein. Die Verbindungen (b) sollten inert gegenüber Umesterungskatalysatoren sein.

Beispiele für geeignete **aromatische Verbindungen (b)** sind: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungsund Bromierungsprodukte der vorstehend genannten Verbindungen. Bisphenol A ist als aromatische Verbindung (b) bevorzugt.

In einer bevorzugten Ausführungsform wählt man die Hydroxyverbindungen (b) aus der Klasse der Fettalkohole, Alkandiole und Polyetherdiole. Gewünschtenfalls können diese Verbindungen auch alkoxyliert sein.

Bei den Fettalkoholen handelt es sich um primäre Alkohole mit 6 bis 36 C-Atomen, die gesättigt oder olefinisch ungesättigt sein können. Beispiele für geeignete Fettalkohole sind Hexanol, Heptanol, Octanol, Pelargonalkohol, Decanol, Undecanol, Laurylalkohol, Tridecanol, Myristinalkohol, Pentadecanol, Palmitylalkohol, Heptadecanol, Stearylalkohol, Nonadecanol, Arachidylalkohol, Heneicosanol, Behenylalkohol, Tricosanol, Lignocerylalkohol, 10-Undecanol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol.

Bei den **Alkandiolen** handelt es sich um Verbindungen der allgemeinen Struktur HOCH₂-R⁵-CH₂OH, worin der Rest R⁵ ein hydrophober Kohlenwasserstoffrest ist, der gesättigt oder ungesättigt, geradkettig oder verzweigt sein kann und gegebenenfalls auch aromatische Strukturelemente enthalten kann. Beispiele sind 1,6-Hexandiol, 1,7-Heptandiol und 1,8-Octandiol, ferner Polyoxytetramethylendiole - auch als Polytetrahydrofurane bekannt - sowie die sogenannten Dimerdiole. Die Dimerdiole sind im Rahmen der vorliegenden Erfindung ganz besonders bevorzugt.

**Dimerdiole** sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 50% und insbesondere 75% aufweisen und bei denen die Zahl der C-Atome pro Dimermolekül überwiegend im Bereich von 36 bis 44 liegt.

Unter **Polyetherdiolen** werden im Rahmen der vorliegenden Erfindung Diole der allgemeinen Struktur HOCH₂-R⁶-CH₂OH verstanden, worin der Rest R⁶ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch ein Sauerstoffatom ersetzt sind.

Eine besonders attraktive Klasse von Polyetherdiolen ist durch Alkoxylierung von Alkandiolen wie 1,2-Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol, Polyoxytetramethylendiolen (Polytetrahydrofuranen) und Dimerdiolen zugänglich. Bei der Herstellung dieser alkoxylierten Diole geht man üblicherweise wie folgt vor: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen.

Als Umesterungskatalysatoren kommen für die Umsetzung der Verbindungen (a) und (b) an sich alle dem Fachmann aus dem Stand der Technik bekannten Umesterungskatalysatoren in Frage. Beispiele für geeignete Katalysatoren sind Natriummethylat, Dibutylzinndiacetat, Tetraisopropylorthotitanat. Die Katalysatoren können nach der Umesterung gewünschtenfalls deaktiviert werden, dies ist jedoch nicht zwingend erforderlich.

Als **Aminokomponenten (c)** dienen Mono-, Di- oder Polyaminopolyalkylenoxid-Verbindungen. Darunter ist zu verstehen, daß diese Verbindungen einerseits ein, zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (c) sind zumindest teilweise bei 20 °C in Wasser lösliche Substanzen.

Die Herstellung der Verbindungen (c) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (c) Substanzen der allgemeinen Struktur R⁸-O-R⁹-CH₂CH(R¹⁰)-NH₂ ein. Darin bedeuten:
- R⁸ eine einwertige organische Gruppe mit 1-12 C-Atomen, die aliphatisch, cycloaliphatisch oder aromatisch sein kann
- R⁹ eine Polyoxyalkylengruppe, die aus 5-200 Polyoxyalkyleneinheiten, insbesondere EO- und/oder PO-Einheiten, aufgebaut ist
- R¹⁰ Wasserstoff oder ein aliphatischer Rest mit bis zu 4 C-Atomen.

Besonders geeignete Vertreter der Verbindungen (c) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche **WO 96/20971**, Seite 10, Zeilen 12-15).

Die Verbindungen (c) haben vorzugsweise mittlere Molekulargewichte (Zahlenmittel; Mn) im Bereich von 148 bis 5000, insbesondere zwischen 400 und 2000.

Bei den **Epoxidverbindungen (d)** handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyloder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Das Epoxidäquivalentgewicht einer Substanz ist dabei als diejenige Menge der Substanz (in Gramm) definiert, welche 1 mol Oxiranringe enthält.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungsund Bromierungsprodukte der vorstehend genannten Verbindungen; Bisphenol A ist dabei ganz besonderes bevorzugt.

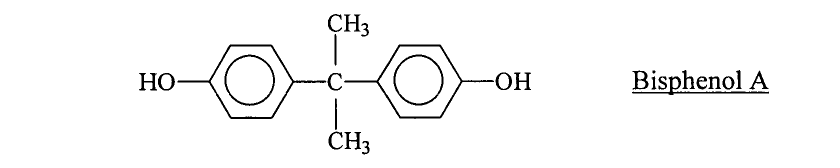

Auch die Polyglycidylether von mehrwertigen Alkoholen sind als Verbindungen (d) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (d) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen (d) findet sich in:
- **A.M. Paquin, Handbuch "Epoxidverbindungen und Epoxidharze",** Springer-Verlag, Berlin 1958, Kapitel V, Seiten 308 bis 461; ferner in:
- **Lee, Neville "Handbook of Epoxy Resins",** 1967, Kapitel 2, Seiten 2-1 bis 2-33.

Es können auch Mischungen von mehreren Epoxidverbindungen (d) verwendet werden.

Als Amine (e) kommen im Rahmen der vorliegenden Erfindung primäre und/oder sekundäre Amine zum Einsatz. Vorzugsweise setzt man als Amine (e) Polyamine mit mindestens zwei Stickstoffatomen und mindestens zwei aktiven Amino-Wasserstoffatomen pro Molekül ein. Es können aliphatische, aromatische, aliphatisch-aromatische, cycloaliphatische und heterocyclische Di- und Polyamine benutzt werden.

Beispiele für geeignete Amine (e) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, die Mischung der über eine Methylenbrücke verknüpften Poly(cyclohexyl-aromischen)amine (auch als MBPCAA bekannt) und und Polyaminoamide.
Des weiteren kommen als Verbindungen (e) auch die Reaktionsprodukte der Umsetzung der gerade genannten Amine mit den oben beschriebenen α,β-ungesättigten Carbonsäureestern (a) in Frage, ferner die Reaktionsprodukte der Umsetzung gerade genannten Amine mit den oben beschriebenen Polyepoxidverbindungen (d).

**Härter vom Typ B2)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestem (a) im Bereich von 10:1 bis 1:10 liegt,
   das hierbei erhaltene Zwischenprodukt Z4 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z5 anschließend mit
(e) ein oder mehreren primären und/oder sekundären Aminen umsetzt, wobei man das Äquivalentverhältnis von Oxiranringen in Zwischenprodukt Z5 zu den reaktiven H-Atomen an den Aminostickstoffatomen von (e) auf einen Wert im Bereich von 1 : 1,5 bis 1 : 20 einstellt.

Für die Substanzen (a) sowie die Substanzen (c) bis (e) gilt ansonsten das oben - für Härter vom Typ B1) - Gesagte.

**Härter vom Typ B3)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   das dabei zunächst erhaltene Zwischenprodukt Z4 anschließend mit
(g) ein oder mehreren Polyhydroxyverbindungen umsetzt, wobei man das Äquivalentverhältnis von Estergruppen in Zwischenverbindung Z4 zu Hydroxygruppen in Polyhydroxyverbindung (g) auf einen Wert im Bereich von 1 : 1,1 bis 1 : 10 einstellt
   und das hierbei erhaltene Zwischenprodukt Z6 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z6 auf einen Wert im Bereich von 1,5 : 1 und 6 : 1 einstellt
   und das hierbei erhaltene Zwischenprodukt Z7 anschließend mit
(e) ein oder mehreren primären und/oder sekundären Aminen umsetzt, wobei man das Äquivalentverhältnis von Oxiranringen in Zwischenprodukt Z7 zu den reaktiven H-Atomen an den Aminostickstoffatomen von (e) auf einen Wert im Bereich von 1 : 1,5 bis 1 : 20 einstellt.

Für die Substanzen (a) und die Substanzen (c) bis (e) gilt ansonsten das oben - für Härter vom Typ B1) - Gesagte.

Die Polyhydroxyverbindungen (g) können aliphatisch oder aromatisch sein. In einer Ausführungsform wählt man die Polyhydroxyverbindungen (g) aus der Klasse spezieller aliphatischer Diole und zwar der Alkandiole - insbesondere der Dimerdiole-Polyetherdiole und Polyesterdiole. Für die Alkandiole - einschließlich der Dimerdiole - und die Polyetherdiole gilt das oben - für Härter vom Typ B1) in Bezug auf Komponente (b) - Gesagte. Für die Polyesterdiole gilt folgendes: Unter **Polyesterdiolen** werden im Rahmen der vorliegenden Erfindung Diole der allgemeinen Struktur HOCH₂-R⁷-CH₂OH verstanden, worin der Rest R⁷ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch eine COO-Einheit ersetzt sind. Zur Herstellung werden üblicherweise difunktionelle Polyole mit Dicarbonsäuren oder deren Anhydriden umgesetzt. Häufig verwendete Polyole sind Ethylenglykol, 1,2-Propandiol, 1,4-Butandiol, 1,6-Hexandiol. Übliche Dicarbonsäuren sind Bernsteinsäure, Adipinsäure, Phthalsäureanhydrid. Besonders bevorzugt sind dabei 1,6-Hexandiol-Adipinsäurepolyester.

### Weitere Komponenten

In den erfindungsgemäßen 2-K-Beschichtungszusammensetzungen können neben den bereits genannten obligatorischen Komponenten A), B) und W) gewünschtenfalls auch weitere Additive eingesetzt werden. Beispiele hierfür sind externe Gleitmittel, Weichmacher, Antistatika, Kupplungsmittel, Füllstoffe, Netzmittel und Entschäumer. In disem Fall gilt die Maßgabe, daß sich die Summe aller Komponenten der 2-K-Beschichtungszusammensetzungen,also die Summe der Komponenten A), B), W) und der gewünschten weiteren Additive zu 100 Gew.-% ergänzt.

### Beispiele

### Eingesetzte Substanzen

### Erfindungsgemäße Epoxidharze

**Chem-Res E 20:** flüssiges Epoxidharz auf Basis von Bisphenol A/F; das H-Equivalent beträgt 190 (Fa. Cognis S.p.A. / Italien)

**Chem-Res E 50:** Epoxidharz auf Basis von Bisphenol A/F, 75-Gew.-%-ig in Toluol; das H-Equivalent beträgt 475 (Fa. Cognis S.p.A. / Italien)

### Härter

**Waterepoxy 751:** Amin-basierter Härter für Epoxidharze; (Fa. Cognis Deutschland GmbH & Co. KG / Deutschland).

**Waterepoxy 603:** Polyamidoamin-basierter Härter für Epoxidharze; 100 Teile enthalten 50 Gew.-Teile Härter und 50 Gew.-Teile Wasser; Aminäquivalent = 190 (Fa. Cognis Deutschland GmbH & Co. KG / Deutschland).

**Versamid 225:** handelsüblicher Polyamid-basierter Härter für Epoxidharze; 100 Teile enthalten 60 Gew.-Teile Härter, 32 Gew.-Teile Xylol und 8 Gew.-Teile n-Butanol; Aminäquivalent = 95

### Prüfung der Schälfestigkeit (in Anlehnung an ISO 7004 / DIN 53539)

Glasprüfkörper der Größe 25 x 66 x 3 mm wurden mit Aceton entfettet und getrocknet. Anschließend wurden die Prüfkörper an einer Oberfläche mit einer Filmziehrakel (Typ 360, Fa. Erichsen /Sundwig) mit einer Mischung von Epoxidharz und Härter beschichtet.

Die Schichtdicke betrug dabei 25 Mikrometer. In der genannten Mischung lagen die beiden Komponenten (Epoxidharz und Härter) exakt im stöchiometrischen Mischungsverhältnis, d.h. einem Äquivalentverhältnis von 1 : 1 vor.

Man ließ 24 Stunden bei 23 °C aushärten. Anschließend wurde auf die Beschichtung der Glasprüfkörper ein handelsüblicher 2-Komponenten-Epoxidharzkleber (Metallon FL; Fa. Henkel KgaA / Düsseldorf) aufgetragen und darauf ein Stoffstreifen (Material: Mantelpopeline, Polyester/Baumwolle 67:33; Größe des Streifens: 25 x 195 mm) aufgelegt und mit Klammern fixiert. Man ließ die derart vorbereiteten Prüfling 7 Tage bei 23 °C ruhen und bestimmte dann die Schälfestigkeit (Peel) in N/mm² durch Abziehen des Stoffstreifens mittel einer Zwick-Zerreißmaschine.

Die Meßwerte der verschiedenen Versuche sind Tabelle 1 zu entnehmen. Die angegebenen Peel-Werte sind jeweils Mittelweerte aus drei Messungen.

**Tabelle 1**

| **Harz** | **Härter** | **Peel in N/mm**^{**2**} |
|---|---|---|
| Chem-Res E 20 | Waterpoxy 751 | 1,37 |
| Chem-Res E 20 | Waterpoxy 603 | 1,99 |
| Chem-Res E 20 | Versamid 225 | 1,56 |
| Chem-Res E 50 | Versamid 225 | 1,20 |

## Patentansprüche

1. Verwendung von Epoxidharzen A), die Umsetzungsprodukte von Bisphenol-A und/oder Bisphenol-F mit Epichlorhydrin darstellen, zur Beschichtung von Glas.

2. Verwendung von wäßrigen 2-K-Beschichtungszusammensetzungen enthaltend
A) 1 bis 98 Gew.-% Epoxidharze, die Umsetzungsprodukte von Bisphenol-A und/oder Bisphenol-F mit Epichlorhydrin darstellen,
B) 1 bis 98 Gew.-% wasserverdünnbare Epoxidharzhärter und
W) 1 bis 98 Gew.-% Wasser
zur Beschichtung von Glas.

3. Verwendung nach Anspruch 1 oder 2, wobei man als Komponente A) bei 20 °C flüssige Epoxidharze einsetzt.

4. Verwendung nach einem der Ansprüche 1 bis 3, wobei man als Komponente A) bei 20 °C flüssige Epoxidharze einsetzt, die Umsetzungsprodukte von Bisphenol-A mit Epichlorhydrin sind.

5. Verwendung nach einem der Ansprüche 1 bis 4, wobei es sich bei dem zu beschichtenden Glas um Glasfasern handelt.

6. Beschichtete Glasfasern, dadurch erhältlich, daß man man eine wäßrige 2-K-Beschichtungszusammensetzung enthaltend
A) 1 bis 98 Gew.-% Epoxidharze, die Umsetzungsprodukte von Bisphenol-A und/oder Bisphenol-F mit Epichlorhydrin darstellen,
B) 1 bis 98 Gew.-% wasserverdünnbare Epoxidharzhärter und
W) 1 bis 98 Gew.-% Wasser
mit der Oberfläche der Glasfasern in Kontakt bringt und anschließend aushärten läßt.

7. Verwendung von beschichteten Glasfasern nach Anspruch 6 zur Verstärkung von Kunststoffasern.

8. Verbundwerkstoff enthaltend beschichtete Glasfasern gemäß Anspruch 6.
